# EUROPÄISCHE PATENTSCHRIFT

(11) **EP 2 780 958 B1**
(45) Veröffentlichungstag und Bekanntmachung des Hinweises auf die Patenterteilung: **18.11.2015**
(21) Anmeldenummer: 12759707.8
(22) Anmeldetag: 17.09.2012
(51) Int. Cl.: H01M 10/625, H01M 10/6556, H01M 10/6567, H01M 10/617, H01M 10/656, H01M 2/10

(54) **BATTERIESYSTEM MIT EINEM TEMPERIERKÖRPER ENTHALTEND EINEN TEMPERIERKANAL UND EINEN BYPASS SOWIE KRAFTFAHRZEUG WELCHES DAS BATTERIESYSTEM ENTHÄLT**
BATTERY SYSTEM WITH A TEMPERATURE-CONTROL ELEMENT CONTAINING A TEMPERATURE-CONTROL CHANNEL AND A BYPASS AND MOTOR VEHICLE CONTAINING THE BATTERY SYSTEM
SYSTÈME DE BATTERIE ÉQUIPÉ D'UN CORPS DE THERMORÉGULATION CONTENANT UN CONDUIT DE THERMORÉGULATION ET UNE DÉRIVATION, ET VÉHICULE À MOTEUR ÉQUIPÉ D'UN TEL SYSTÈME DE BATTERIE

(30) Priorität: 14.11.2011 DE 102011086246
(43) Veröffentlichungstag der Anmeldung: 24.09.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: YAN, Xiaofeng, 71384 Weinstadt (DE); PANKIEWITZ, Christian, 70378 Stuttgart (DE); GUENON, Sylvain, F-60490 Ressons Sur Matz (FR); LOEW, Christian, 70569 Vaihingen (DE); SCHMIDT, Achim, 71706 Marktgroeningen (DE)
(74) Vertreter: Bee, Joachim
(86) Internationale Anmeldenummer: PCT/EP2012/068182
(87) Internationale Veröffentlichungsnummer: WO 2013/072093

(56) Entgegenhaltungen:
- WO-A1-2010/094787
- DE-A1-102009 046 801
- US-A1- 2011 212 355

## Beschreibung

Die vorliegende Erfindung betrifft ein Batteriesystem, welches eine Mehrzahl an Batteriezellen und einen Temperierkörper umfasst, welcher über eine Temperierfläche mit den Batteriezellen wärmeleitend verbunden ist. Der Temperierkörper weist in seinem Inneren einen Temperierkanal auf, welcher vorlaufseitig über einen Einlass und rücklaufseitig über einen Auslass aus dem Temperierkörper geführt ist.

Ferner betrifft die Erfindung ein Kraftfahrzeug umfassend das Batteriesystem.

### Stand der Technik

Es zeichnet sich ab, dass in Zukunft sowohl bei stationären Anwendungen, wie Windkraftanlagen, in Hybrid- oder Elektrokraftfahrzeugen, als auch bei Elektronikgeräten, wie Laptops oder Mobiltelefonen vermehrt neue Batteriesysteme zum Einsatz kommen werden, an die sehr hohe Anforderungen bezüglich Zuverlässigkeit, Sicherheit, Leistungsfähigkeit und Lebensdauer gestellt werden.

Um die Sicherheit und die Funktion von Lithium-Ionen-Batterien zu gewährleisten, ist es erforderlich, die Lithium-Ionen-Zellen innerhalb eines vorgegebenen Temperaturbereiches zu betreiben. Während des Betriebs der Lithium-Ionen-Zellen entsteht Wärme einerseits in Form Joulescher Wärme, welche durch den elektrischen Strom und den inneren Widerstand einer Lithium-Ionen-Zelle beschrieben werden kann, sowie durch eine Wärmeproduktion aufgrund reversibler Vorgänge in der Lithium-Ionen-Zelle. Diese Wärme muss abgeführt werden, um ein Erwärmen der Lithium-Ionen-Zelle über eine kritische Betriebstemperatur- und somit ein Überhitzen der Lithium-Ionen-Zelle - zu vermeiden.

Um eine Lithium-Ionen-Batterie in günstigen Temperaturbereichen zu betreiben, sind die Lithium-Ionen-Zellen an ein Temperiersystem angeschlossen. Dieses kann prinzipiell nach der Art des verwendeten Temperierfluids in folgende Kategorien eingeteilt werden:
1. Luftkühlung,
2. Kühlmittelkühlung und
3. Kältemittelkühlung.

Die Auswahl des Temperierfluids erfolgt abhängig vom Grad der geforderten Temperierleistung.

In der Regel sind mehrere Zellen zu einem Modul und wiederum mehrere Module zu einer Batterie zusammengefasst. Bei Temperierung mit einer Temperierplatte werden ein oder mehrere Batteriemodule gleichzeitig von einer Temperierplatte per Wärmeleitung temperiert. Als Werkstoff für eine Temperierplatte ist Aluminium geläufig oder es wird ein anderer Werkstoff mit mindestens gleich guten wärmeleitenden Eigenschaften verwendet.

Die Temperierplatte erwärmt die Lithium-Ionen-Zellen, beispielsweise bei einem Start an kalten Tagen oder kühlt sie, beispielsweise während eines Hochlastbetriebes bei hohen Außentemperaturen. In vielen technischen Anwendungen werden die Lithium-Ionen-Zellen über ihre Unterseite temperiert. Bauraumbedingt ist es vielfach notwendig, die Batteriezellen auf mehrere Temperierplatten innerhalb einer Batterie zu verteilen. Für den optimalen Batteriebetrieb sind diese Temperierplatten hydraulisch, entsprechend ihrer thermischen Belastungen, abzustimmen. Mittels Verteilerblöcken wird dabei der Temperiermittelmassenstrom aufgeteilt und über flexible Schlauchleitungen den einzelnen Temperierplatten zugeführt. Der Rücklauf wird dementsprechend umgekehrt von jeder Temperierplatte mittels flexibler Schläuche einem zentralen Sammler zugeführt und aus dem Batteriegehäuse geleitet. Für die Auslegung eines solchen Temperiersystems werden in der Regel Lastzyklen herangezogen, mit denen der Temperaturanstieg innerhalb der Lithium-Ionen-Batterie bei bekannten thermischen Randbedingungen vorhergesagt werden kann. Bei Kühlung mehrerer Batteriezellen mit einer, von Temperierfluid durchströmten, Temperierplatte nimmt die Temperatur des Temperierfluids durch die aufgenommene Verlustwärme der Batteriezellen beim Durchströmen der Temperierplatte stetig zu. Dadurch werden jene Batteriezellen, welche von dem Temperierfluid erst später erreicht werden, mit einem wärmeren Temperierfluid gekühlt als jene Batteriezellen, welche zuvor bereits von dem Temperierfluid gekühlt wurden. Bei annähernd gleicher Verlustleistung der Batteriezellen ergibt sich für die von dem bereits erwärmten Temperierfluid gekühlten Batteriezellen zwangsläufig eine höhere Temperatur, als für jene, die von dem noch kühleren Temperierfluid gekühlt wurden. Für eine optimale Leistungsfähigkeit und Lebensdauer der Batterie ist es jedoch notwendig, alle ihre Batteriezellen auf eine annähernd gleiche (optimale) Temperatur zu temperieren.

Die Druckschrift DE 10 2006 061 270 A1 offenbart eine Batterie, ein Batteriemodul sowie ein Verfahren zum Betreiben eines Batteriemoduls. Es wird hierbei die Homogenisierung der Temperatur auf ein günstiges Maß zum Betrieb der Batteriezellen dadurch bewirkt, dass zwischen den Batteriezellen ein wärmeleitendes Batteriebett, bestehend aus einem Metallkörper oder aus einer gut wärmeleitenden Kunststoffmasse, die gegebenenfalls zusätzlich Metallpartikel enthält, eingebracht ist. Dadurch kann ein gewollter Ausgleich der Temperatur zwischen den Batteriezellen hergestellt werden; die Temperatur kann auch länger auf einem erforderlichen Niveau gehalten und gegebenenfalls auch schneller abgegeben werden. Eine Ausgleichs- und eine Ladeelektronik nehmen zusätzlich Einfluss auf die Einhaltung einer optimalen Temperatur während der Entlade- oder Ladezyklen der Batteriezellen.

Offenbarung der Erfindung Erfindungsgemäß wird ein Batteriesystem nach Anspruch 1 Verfügung gestellt. Dieses umfasst mehrere Batteriezellen und mindestens einen Temperierkörper, welcher über seine Temperierfläche wärmeleitend mit den Batteriezellen verbunden ist. Der Temperierkörper weist in seinem Inneren einen Temperierkanal auf, welcher mittels eines vorlaufseitigen Einlasses und eines rücklaufseitigen Auslasses aus dem Temperierkörper geführt ist. Dabei ist ein Bypass über einen teilenden Knoten und einen zusammenführenden Knoten mit dem Temperierkanal verbunden. Der teilende Knoten ist näher am Einlass angeordnet als der zusammenführende Knoten. Der Temperierkanal ist dazu ausgebildet ein Temperierfluid aufzunehmen, welches in Strömungsrichtung am teilenden Knoten abgezweigt und in den Bypass, welcher einen vom Temperierkanal getrennt geführten Kanal darstellt, geleitet wird. Das Temperierfluid wird daraufhin strömungstechnisch parallel zum Temperierkanal geführt, bis der Strom des Bypasses im zusammenführenden Knoten in den Temperierkanal zurückgeführt wird. Die Vorlaufseite bezeichnet jenes Ende des Temperierkanals, durch welches das frisch temperierte Temperierfluid eintreten kann, wohingegen die Rücklaufseite das andere Ende des Temperierkanals bezeichnet. Als Temperierfluid kann Wasser, beispielsweise mit Frostschutzmittel, versetzt zum Einsatz kommen. Hierfür eignet sich besonders eine Mischung aus Wasser und Glycol.

Das erfindungsgemäße Batteriesystem hat den Vorteil, dass mehrere auf einer einzigen Kühlplatte angeordnete Batteriezellen auf eine annährend gleiche Temperatur temperiert werden können. Dies trifft auch auf jene Batteriezellen zu, welche aufgrund der Strömungsführung im Temperierkörper vom Temperierfluid erst zu einem späteren Zeitpunkt erreicht werden. Als Folge weist die Batterie eine erhöhte Lebensdauer und Leistungsfähigkeit auf.

Der Bypass ist thermisch vom Temperierkörper isoliert. Eine thermische Isolation oder auch Entkoppelung kann bevorzugt realisiert sein, indem der Bypasskanal aus einem wärmedämmenden Material, beispielsweise Kunststoff, ausgeführt ist. Eine weitere bevorzugte Möglichkeit besteht darin, dass der Bypasskanal durch eine wärmedämmende Zwischenschicht vom restlichen Temperierkörper und insbesondere vom Temperierkanal getrennt ist. Durch die thermische Isolation des Bypasses vom Temperierkörper wird bewirkt, dass sich das Temperierfluid im Bypass möglichst wenig erwärmt. Ferner bevorzugt befinden sich der Bypass und der Temperierkanal in derselben Ebene, parallel zur Temperierfläche. Dabei wird von einem parallel zur Temperierfläche verlaufenden Temperierkanal und Bypass ausgegangen. Ist in Richtung normal zur Temperierfläche die maximale Ausdehnung des Temperierkanals größer als jene des Bypasses, so liegt der gesamte Bypass zwischen zwei Ebenen, welche parallel zur Temperierfläche sind und den Temperierkanal auf seinen beiden gegenüberliegenden Seiten tangieren. Ist in Richtung normal zur Temperierfläche die maximale Ausdehnung des Bypasses größer als jene des Temperierkanals, so liegt der gesamte Temperierkanal zwischen zwei Ebenen, welche parallel zur Temperierfläche sind und den Bypass auf seinen beiden gegenüberliegenden Seiten tangieren. Befinden sich Temperierkanal und Bypass in einer Ebene, so kann ein besonders platzsparender, flacher Temperierkörper realisiert werden. Ferner wird es dadurch möglich, symmetrische Kühlbedingungen für die Temperierfläche und die der Temperierfläche gegenüberliegende Seitenfläche zu schaffen.

Des Weiteren bevorzugt sind die Normalabstände aller Teilbereiche des Bypasses zur Temperierfläche größer dem Normalabstand jedes beliebigen Teilbereichs des Temperierkanals. Somit weist jener Teilbereich des Bypasses mit dem kleinsten Normalabstand zur Temperierfläche einen größeren Normalabstand auf, als jener Teil des Temperierkanals mit dem größten Normalabstand zur Temperierfläche. Diese Betrachtung erstreckt sich nicht auf mögliche zwischen dem Bypass und dem Temperierkanal angeordnete Überströmkanäle, welche zu den teilenden und zusammenführenden Knoten gezählt werden können.

Ferner bevorzugt ist die, auf die Temperierfläche normal projizierte, Mittellinie des Bypasses Teil der auf die Temperierfläche normal projizierten Mittellinie des Temperierkanals. Diese Ausgestaltung ermöglicht die Versorgung eines jeden Temperierkanals mit temperiertem Fluid aus einem eigenen Bypass, welcher an der der Temperierfläche abgewandten Seite des Temperierkanals angeordnet ist.

In einer bevorzugten Ausgestaltung der Erfindung sind der Einlass und der Auslass auf gegenüberliegenden Seitenflächen des Temperierkörpers angeordnet. Diese Ausführung ermöglicht beispielsweise eine I-Form des Temperierkanals. Dadurch, dass sich Ein- und Auslass auf gegenüberliegenden Seiten des Temperierkanals befinden, können besonders platzsparend mehrere Temperierkörper parallel und gleichsinnig aneinander angeordnet sein, wodurch sich alle Einlässe auf der einen Seite und alle Auslässe auf der anderen Seite der parallel angeordneten Temperierkörper befinden. Dies ermöglicht eine voneinander räumlich getrennte Zuführung von temperiertem und Abführung von erwärmtem oder abgekühltem Temperierfluid.

Gemäß einer ferner bevorzugten Ausgestaltung der Erfindung sind der Einlass und der Auslass auf derselben Seitenfläche des Temperierkörpers angeordnet. Diese Ausführung ermöglicht beispielsweise eine U-Form des Temperierkanals. Dadurch, dass sich Ein- und Auslass auf derselben Seite des Temperierkanals befinden, können wiederum analog zur I-Form besonders platzsparend mehrere Temperierkörper parallel und gleichsinnig aneinander angeordnet sein, wobei sich nun jedoch alle Einlässe und alle Auslässe auf derselben Seite der parallel angeordneten Temperierkörper befinden. Dadurch wird es ermöglicht, sowohl die Zuleitungen zu den Einlässen als auch die Ableitungen von den Auslässen platzsparend auf derselben Seite der parallel angeordneten Temperierkörper anzuordnen.

Bevorzugt sind die Batteriezellen Litihium-Ionen-Sekundärzellen. Durch den Einsatz der Lithium-Ionen Technologie können besonders hohe Leistungs- und Energiespeicherdichten erzielt werden, wodurch sich besonders im Bereich der Elektrotraktion weitere Vorteile einstellen.

Bevorzugt besteht der Temperierkörper zu einem Großteil aus Aluminium oder Kupfer, wodurch ein hoher Wärmeleitwert ermöglicht wird.

Ferner wird ein Kraftfahrzeug mit einem erfindungsgemäßen Batteriesystem zur Verfügung gestellt, wobei das Batteriesystem in der Regel zur Speisung eines elektrischen Antriebssystems des Fahrzeuges vorgesehen ist.

Vorteilhafte Weiterbildungen der Erfindung sind in den Unteransprüchen angegeben oder der Beschreibung zu entnehmen.

### Zeichnungen

Ausführungsbeispiele der Erfindung werden anhand der Zeichnungen und der nachfolgenden Beschreibung näher erläutert. Es zeigen:
Figur 1 ein erfindungsgemäßes Batteriesystem,
Figuren 2 bis 4 einen Temperierkörper mit Temperierkanal in U-Form,
Figuren 5 und 6 einen Temperierkörper mit mehreren Temperierkanälen in I-Form, und

Figur 7 einen Temperierkörper mit einem tiefer angeordneten Bypass.

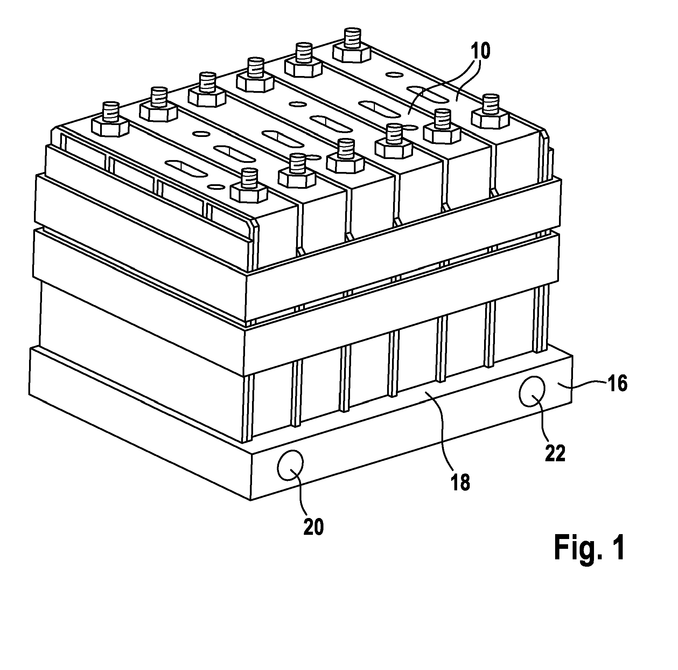

Figur 1 zeigt ein erfindungsgemäßes Batteriesystem. Eine Mehrzahl an Batteriezellen 10 ist auf einem Temperierkörper 16 angeordnet. Der Temperierkörper 16 umfasst einen Einlass 20 und einen Auslass 22, durch welche im Betrieb ein Temperierfluid, z. B. eine Temperierflüssigkeit ein- und austreten kann. Das Temperierfluid durchströmt auf dem Weg vom Einlass 20 zum Auslass 22 einen im Inneren des Temperierkörpers 16 angeordneten Temperierkanal 24 und ermöglicht so eine Wärmeübertragung zwischen Zellen 10 und dem Temperierfluid, wobei die Wärme über die Temperierfläche 18 per Wärmeleitung übertragen wird.

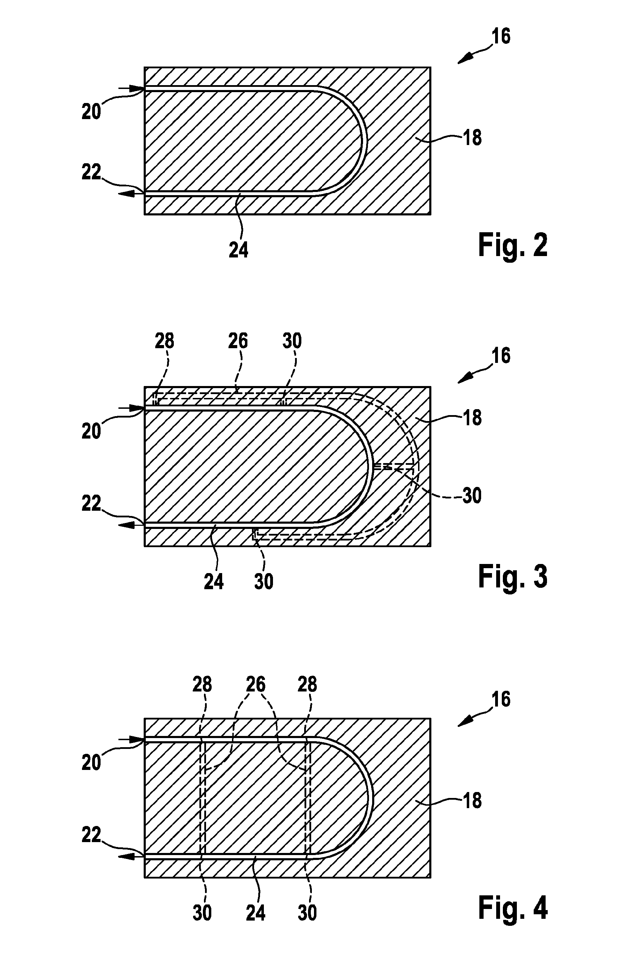

Die Figuren 2, 3 und 4 zeigen die innere Strömungsführung unterschiedlicher Temperierkörper 16 in einer schematischen Schnittdarstellung, wobei die Schnittebene parallel versetzt zur Temperierfläche 18 durch den Temperierkanal 24 verläuft. Der Temperierkanal 24 ist in U-Form ausgebildet, der Einlass 20 und der Auslass 22 befinden sich demnach auf derselben Seitenfläche des Temperierkörpers 16.

Figur 2 zeigt schematisch einen Temperierkörper 16 gemäß dem Stand der Technik. Während des Betriebes durchströmt das Temperierfluid den Temperierkanal 24 ausgehend vom Einlass 20 bis zum Auslass 22 und erwärmt sich, wenn die Batteriezellen 10 gekühlt werden, oder kühlt sich ab, wenn die Batteriezellen 10 beheizt werden.

Der in Figur 3 gezeigte, schematisch dargestellte und erfindungsgemäße Temperierkörper 16 umfasst einen schematisch strichliert eingezeichneten Bypass 26, welcher außerhalb des Temperierkanals 24 angeordnet ist. Der Bypass 26 ist mittels eines teilenden Knotens 28 und drei zusammenführenden Knoten 30 strömungstechnisch mit dem Temperierkanal 24 verbunden.

Die in der Figur 4 schematisch strichliert dargestellten beiden Bypässe 26 sind jeweils mittels eines teilenden Knotens 28 und eines zusammenführenden Knotens 30 strömungstechnisch mit dem Temperierkanal 24 verbunden, wobei die Bypässe 26 zweckmäßig auf der Innenseite des U-förmigen Temperierkanals 24 angeordnet sind.

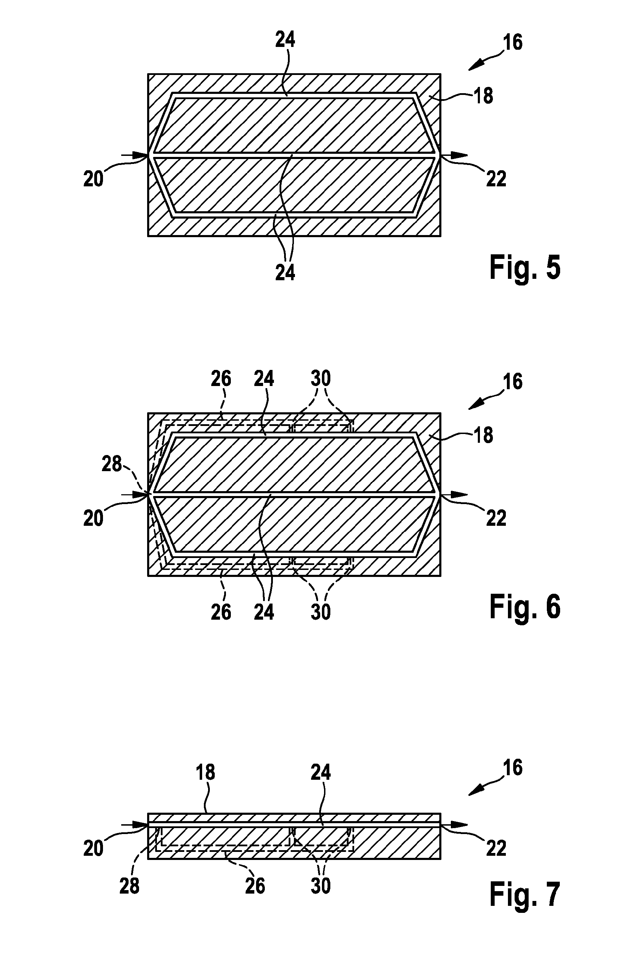

Die Figuren 5 und 6 zeigen die innere Strömungsführung unterschiedlicher Temperierkörper 16 in einer schematischen Schnittdarstellung, wobei die Schnittebene parallel versetzt zur Temperierfläche durch den Temperierkanal 24 verläuft. Die Temperierkanäle 24 sind wie abgebildet in I-Form ausgebildet, der Einlass 20 und der Auslass 22 befinden sich demnach auf gegenüberliegenden Seitenflächen des Temperierkörpers 16.

Figur 5 zeigt schematisch einen Temperierkörper 16 gemäß dem Stand der Technik. Während des Betriebes durchströmt das Temperierfluid den Temperierkanal 24 ausgehend vom Einlass 20 bis zum Auslass 22, wobei das Temperierfluid nach dem Einlass 20 aufgeteilt, in den Temperierkanälen 24 parallel geführt und vor dem Auslass 22 wieder zusammengeführt wird. Es erwärmt sich, wenn die Batteriezellen 10 gekühlt werden, oder kühlt sich ab, wenn die Batteriezellen 10 beheizt werden.

Der in Figur 6 gezeigte, schematisch dargestellte und erfindungsgemäße Temperierkörper 16 umfasst zwei symmetrisch ausgebildete, schematisch strichliert eingezeichnete Bypässe 26, welche außerhalb der äußeren beiden Temperierkanäle 24 angeordnet sind. Die Bypässe 26 sind jeweils mittels eines teilenden Knotens 28 und zwei zusammenführenden Knoten 30 strömungstechnisch mit den zugeordneten äußeren Temperierkanälen 24 verbunden.

Die in den Figuren 3, 4 und 6 schematisch gezeigten Bypässe 26 können sich prinzipiell in derselben Ebene parallel zur Temperierfläche 18 wie die Temperierkanäle 24 befinden. Dies ermöglicht einerseits einen möglichst flachen Temperierkörper 16, macht unter Umständen jedoch eine thermische Isolation der Bypässe 26 erforderlich. Bei manchen Anordnungen der Temperierkanäle 24 wird es zudem schwierig, für alle Temperierkanäle 24 Bypässe 26 vorzusehen - siehe Figur 3b. Insbesondere bei eng nebeneinander angeordneten Temperierkanälen 24 ist es nicht ohne Weiteres möglich, Bypässe 26 zwischen den Temperierkanälen 24 anzuordnen.

Eine mögliche Abhilfe wird in Figur 7 gezeigt, welche eine schematische Schnittdarstellung mit einer Schnittebene senkrecht zur Temperierfläche 18 durch einen Temperierkanal 24 zeigt. Es ist ersichtlich, dass die Normalabstände aller Teilbereiche des schematisch strichliert eingezeichneten Bypasses 26 zur Temperierfläche größer dem Normalabstand jedes beliebigen Teilbereichs des Temperierkanals sind. Der Bypass 26 verläuft somit in einer Ebene, die weiter von der Temperierfläche versetzt angeordnet ist als jene Ebene, in der der Temperierkanal 24 verläuft. Zwischen dem Bypass 26 und dem Temperierkanal 24 angeordnete Überströmkanäle (in der Zeichnung vertikal dargestellt), welche zu den Knoten 28 und 30 gezählt werden können, werden nicht als Teil des Bypasses 26 betrachtet. Durch diese Ausgestaltung ist es möglich, den Bypass 26 in der Normalprojektion auf die Temperierfläche 18 deckungsgleich mit dem Temperierkanal 24 anzuordnen. Dadurch können alle Temperierkanäle 24 auch bei komplizierten Anordnungen mit frischem Temperierfluid aus den Bypässen 26 versorgt werden. Zudem wird durch den erhöhten Versatz der Bypässe 26 zur Temperierfläche 18 eine mögliche thermische Isolation erleichtert oder überflüssig.

Um die Funktion der in den Figuren 3, 4, 6 und 7 gezeigten Bypässe 26 sicherzustellen, müssen die Bypässe 26 und die teilenden, sowie die zusammenführenden Knoten 28, 30 mitsamt Überströmkanälen auf die Temperierkanäle 24 abgestimmt sein. Dies kann beispielsweise über die Querschnittsflächen der Bypässe 26 oder über geeignete Drosseln in den teilenden und zusammenführenden Knoten 28, 30 erfolgen. Während des Betriebes wird in den teilenden Knoten 28 Temperierfluid von den Temperierkanälen 24 abgezweigt. Dieses strömt parallel zu den jeweiligen Temperierkanälen durch den jeweiligen Bypass 26. Während das Temperierfluid im Verlaufe des Temperierkanals 24 durch die zu kühlenden oder zu erwärmenden Batteriezellen 10 zunehmend erwärmt oder abgekühlt wird, bleibt die Temperatur des im Bypass 26 strömenden Temperierfluids weitestgehend konstant. Dies wird beispielsweise durch die bereits erwähnte thermische Isolation oder eine zweckmäßige geometrische Anordnung mit großem Abstand von der Temperierfläche 18 bewirkt. An geeigneten Stellen, welche beispielsweise rechnerisch bestimmt werden können, befinden sich in Strömungsrichtung zusammenführende Knoten 30, an welchen das Temperierfluid zumindest teilweise aus dem Bypass 26 in den Temperierkanal 24 zurückgeführt wird. Nach dem zusammenführenden Knoten 30 hat das Temperierfluid eine Temperatur, welche zwischen der Temperatur des Temperierfluids des Bypasses 26 und der Temperatur des Temperierfluids des Temperierkanals 24 liegt. Folglich entspricht die Temperatur des Temperierfluids nach dem zusammenführenden Knoten 30 eher der Temperatur des Temperierfluids beim teilenden Knoten 28 als jener im Temperierkanal 24 vor dem zusammenführenden Knoten 30. Als Ergebnis werden die Batteriezellen 10 gleichmäßiger auf eine bestimmte Temperatur temperiert als dies ohne Bypässe 26 gemäß den Figuren 2 und 5 der Fall wäre.

## Patentansprüche

1. Batteriesystem umfassend eine Mehrzahl an Batteriezellen (10) und mindestens einen Temperierkörper (16), welcher über eine Temperierfläche (18) mit den Batteriezellen (10) wärmeleitend verbunden ist, und ferner der Temperierkörper (16) in seinem Inneren einen Temperierkanal (24) aufweist, welcher vorlaufseitig über einen Einlass (20) und rücklaufseitig über einen Auslass (22) aus dem Temperierkörper (16) geführt ist, wobei ein Bypass (26) über einen teilenden Knoten (28) und einen zusammenführenden Knoten (30) mit dem Temperierkanal (24) verbunden ist, und der teilende Knoten (28) näher am Einlass (20) als der zusammenführende Knoten (30) angeordnet ist,
**dadurch gekennzeichnet,**
**dass** der Bypass (26) thermisch vom Temperierkörper (16) isoliert oder wärmegedämmt ist.

2. Batteriesystem nach Anspruch 1, wobei sich der Bypass (26) und der Temperierkanal (24) in derselben Ebene parallel zur Temperierfläche (18) befinden.

3. Batteriesystem nach Anspruch 1, wobei die Normalabstände aller Teilbereiche des Bypasses (26) zur Temperierfläche (18) größer als der Normalabstand jedes beliebigen Teilbereichs des Temperierkanals (24) sind.

4. Batteriesystem nach Anspruch 3, wobei die auf die Temperierfläche (18) normal projizierte Mittenlinie des Bypasses (26) Teil der auf die Temperierfläche (18) normal projizierten Mittenlinie des Temperierkanals (24) ist.

5. Batteriesystem nach einem der Ansprüche 1 bis 4, wobei der Einlass (20) und der Auslass (22) auf gegenüberliegenden Seitenflächen des Temperierkörpers (16) angeordnet sind.

6. Batteriesystem nach einem der Ansprüche 1 bis 4, wobei der Einlass (20) und der Auslass (22) auf derselben Seitenfläche des Temperierkörpers (16) angeordnet sind.

7. Batteriesystem nach einem der Ansprüche 1 bis 6, wobei die Batteriezellen Litihium-Ionen-Sekundärzellen sind.

8. Kraftfahrzeug mit einem Batteriesystem nach einem der Ansprüche 1 bis 7.

## Claims

1. Battery system comprising a plurality of battery cells (10) and at least one temperature control element (16), which has a thermally conductive connection to the battery cells (10) via a temperature control surface (18), the temperature control element (16) in its interior further having a temperature control channel (24), which is routed via an inlet (20) on the supply-flow side and via an outlet (22) from the temperature control element (16) on the return-flow side, wherein a bypass (26) is connected to the temperature control channel (24) via a dividing node (28) and a uniting node (30), and the dividing node (28) is arranged closer to the inlet (20) than the uniting node (30),
**characterized in that**
the bypass (26) is thermally insulated from the temperature control element (16) or heat insulated.

2. Battery system according to Claim 1, wherein the bypass (26) and the temperature control channel (24) are situated in the same plane, parallel to the temperature control surface (18).

3. Battery system according to Claim 1, wherein the perpendicular distances of all constituent areas of the bypass (26) from the temperature control surface (18) are greater than the perpendicular distance of any constituent area of the temperature control channel (24).

4. Battery system according to Claim 3, wherein the center line of the bypass (26) projected perpendicularly onto the temperature control surface (18) is part of the center line of the temperature control channel (24) projected perpendicularly on the temperature control surface (18).

5. Battery system according to one of Claims 1 to 4, wherein the inlet (20) and the outlet (22) are arranged on opposite lateral faces of the temperature control element (16).

6. Battery system according to one of Claims 1 to 4, wherein the inlet (20) and the outlet (22) are arranged on the same lateral face of the temperature control element (16).

7. Battery system according to one of Claims 1 to 6, wherein the battery cells are lithium-ion secondary cells.

8. Motor vehicle having a battery system according to one of Claims 1 to 7.

## Revendications

1. Système de batterie comprenant une multiplicité de cellules de batterie (10) et au moins un corps de thermorégulation (16), qui est relié en conduction de chaleur aux cellules de batterie (10) par une face de thermorégulation (18), et le corps de thermorégulation (16) présente en outre dans son volume intérieur un canal de thermorégulation (24), qui est mené côté arrivée par une entrée (20) et côté retour par une sortie (22) hors du corps de thermorégulation (16), dans lequel une dérivation (26) est raccordée au canal de thermorégulation (24) par un noeud de division (28) et un noeud de réunion (30), et le noeud de division (28) est disposé plus près de l'entrée (20) que le noeud de réunion (30), **caractérisé en ce que** la dérivation (26) est thermiquement isolée du corps de thermorégulation (16) ou est calorifugée.

2. Système de batterie selon la revendication 1, dans lequel la dérivation (26) et le canal de thermorégulation (24) se trouvent dans le même plan parallèle à la face de thermorégulation (18).

3. Système de batterie selon la revendication 1, dans lequel les distances normales de toutes les régions partielles de la dérivation (26) à la face de thermorégulation (18) sont plus grandes que la distance normale de chaque région partielle quelconque du canal de thermorégulation (24).

4. Système de batterie selon la revendication 3, dans lequel la ligne centrale de la dérivation (26) projetée normalement sur la face de thermorégulation (18) fait partie de la ligne centrale du canal de thermorégulation (24) projetée normalement sur la face de thermorégulation (18).

5. Système de batterie selon l'une quelconque des revendications 1 à 4, dans lequel l'entrée (20) et la sortie (22) sont disposées sur des faces latérales opposées du corps de thermorégulation (16).

6. Système de batterie selon l'une quelconque des revendications 1 à 4, dans lequel l'entrée (20) et la sortie (22) sont disposées sur la même face latérale du corps de thermorégulation (16).

7. Système de batterie selon l'une quelconque des revendications 1 à 6, dans lequel les cellules de batterie sont des cellules secondaires lithium-ions.

8. Véhicule à moteur avec un système de batterie selon l'une quelconque des revendications 1 à 7.
